Europäisches Patentamt

European Patent Office

Office européen des brevets

(19)

(11) **EP 0 701 204 A2**

(12) **EUROPÄISCHE PATENTANMELDUNG**

(43) Veröffentlichungstag:
13.03.1996 Patentblatt 1996/11

(51) Int. Cl.$^6$: **G06F 9/46**

(21) Anmeldenummer: 95111418.0

(22) Anmeldetag: 20.07.1995

(84) Benannte Vertragsstaaten:
AT BE CH DE ES FR GB IT LI NL SE

(30) Priorität: 22.07.1994 DE 4426001

(71) Anmelder: **Alcatel SEL Aktiengesellschaft**
**D-70435 Stuttgart (DE)**

(72) Erfinder: **Rausch, Dieter**
**D-76227 Karlsruhe (DE)**

(74) Vertreter: **Schätzle, Albin, Dipl.-Phys. et al**
**Alcatel SEL AG**
**Patent- und Lizenzwesen,**
**Postfach 30 09 29**
**D-70449 Stuttgart (DE)**

(54) **Verfahren zur Überlastvermeidung bei einem Systemanlauf eines Mehrrechnersystems und Mehrrechnersystem dafür**

(57)     In einem Mehrrechnersystem (MRS) mit einem Zentralrechner (ZR) melden bei einem Systeman- oder Systemwiederanlauf eine Vielzahl von Peripherierechner (PRO, ..., PR29) ihre Verfügbarkeit an den Zentralrechner (ZR). Dabei kann es zu Überlastsituationen kommen.

Es wird erfindungsgemäß für jeden Peripherierechner (PRO, ..., PR29) eine rechnerabhängige Meldungsverzögerung ($V_{PR}$) der Verfügbarkeit innerhalb eines vorgegebenen Zeitintervalls (T) eingerichtet. Jeder Peripherierechner hat eine spezifische Rechnernummer ($n_{PR}$). Innerhalb des vorgegebenen Zeitintervalls (T) sollen alle Peripherierechner (PRO, ..., PR29) ihre Verfügbarkeit gemeldet haben. Dazu muß die maximal mögliche Anzahl ($n_{max}$) von Peripherierechnern (PRO, ..., PR29) bekannt sein und der Zentralrechner (ZR) muß ein Angebot (A) von sich gleichzeitig meldenden Peripherierechnern (PRO, ..., PR29) verarbeiten können. Die rechnerabhängige Meldungsverzögerung ($V_{PR}$) beträgt dann:

rechnerabhängige Meldungsverzögerung ($V_{PR}$) = Rechnernummer ($n_{PR}$) MODULO Zeitintervall (T).

Fig. 2

EP 0 701 204 A2

**Beschreibung**

Die vorliegende Erfindung betrifft ein Verfahren zur Überlastvermeidung bei einem Systemanlauf oder einem Systemwiederanlauf eines Mehrrechnersystems gemäß dem Oberbegriff des Patentanspruchs 1 und ein Mehrrechnersystem zur Durchführung dieses Verfahrens gemäß dem Oberbegriff des Patentanspruchs 6.

Ein solches Mehrrechnersystem ist aus dem Aufsatz "System 12, Hardware-Struktur" von S. Das et al in Elektrisches Nachrichtenwesen, Bd. 56, Nr. 2/3, 1981, Seiten 135 bis 147 bekannt. In dem dort beschriebenen Mehrrechnersystem sind mehrere Peripherierechner, die jeweils eine Modulsteuereinheit für ein Anschlußmodul darstellen und jeweils eine Verbindung zu einem Digital-Koppelnetz haben, das die Funktion eines Rechnerkommunikationsnetzes erfüllt, offenbart. Eine Funktionssteuereinheit, die ebenfalls mit dem Digital-Koppelnetz verbunden ist, entspricht einem Zentralrechner.

In einem solchen Mehrrechnersystem melden die Peripherierechner beim Systemanlauf ihre Verfügbarkeit an den Zentralrechner. Dabei kann es zu Überlastsituationen kommen, die zu Verfügbarkeitsmeldungsverlusten und Blockierungen führen.

Es ist daher eine Aufgabe der vorliegenden Erfindung, Überlastsituationen bei einem Systemanlauf in einem Mehrrechnersystem zu vermeiden.

Diese Aufgabe wird erfindungsgemäß durch die technische Lehre des Patentanspruchs 1 oder des Patentanspruchs 6 gelöst.

Vorteilhafterweise kann durch die Erfindung gewährleistet werden, daß die Verfügbarkeitsmeldungen der Peripherierechner an den Zentralrechner in dem Mehrrechnersystem nach einem vorgegebenen Zeitintervall beendet sind.

Weitere vorteilhafte Ausgestaltungen sind den abhängigen Patentanspruchen zu entnehmen.

Zum besseren Verständnis der Erfindung und ihrer Vorteile werden im folgenden drei Ausführungsbeispiele anhand der Figuren 1 bis 3 beschrieben. Es zeigen:

Fig. 1       ein Ausführungsbeispiel eines erfindungsgemäßen Mehrrechnersystems,

Fig. 2       ein Ablaufdiagramm eines ersten Ausführungsbeispiels des erfindungsgemäßen Verfahrens und

Fig. 3       eine Darstellung von Meldungsverzögerungen der Peripherierechner des erfindungsgemäßen Mehrrechnersystems nach Fig. 1.

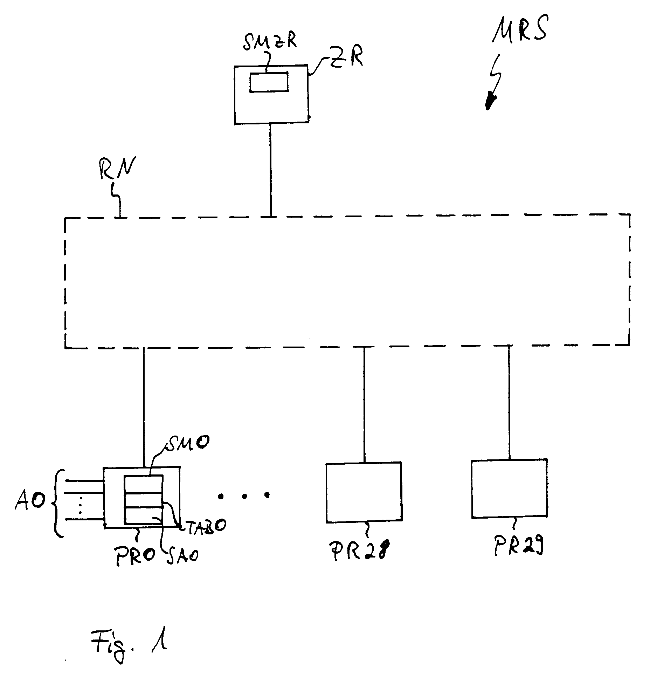

Fig. 1 zeigt das Ausführungsbeispiel eines Mehrrechnersystems MRS. Das Mehrrechnersystem MRS enthält ein Rechnerkommunikationsnetz RN, an das $n = 30$ Peripherierechner PRO, ..., PR28, PR29 und ein Zentralrechner ZR angeschlossen sind. Die Festlegung $n = 30$ Peripherierechner ist willkürlich gewählt, und nur als Beispiel zu verstehen. Es können auch mehrere Zentralrechner an das Rechnerkommunikationsnetz angeschlossen sein. Das Rechnerkommunikationsnetz RN kann ein LAN (Local Area Network), ein ATM (Asynchronous Transfer Modus) Hochgeschwindigkeitsdatennetz, ein Digital-Koppelnetz oder ein anderes Rechnerkommunikationsnetz sein, das Daten zwischen den angeschlossenen Peripherierechnern und dem Zentralrechner transportieren kann.

Die Peripherierechner PRO, ..., PR29 haben im Ausführungsbeispiel den gleichen Aufbau. Stellvertretend wird hier der Aufbau des Peripherierechners PRO mit seinen die Erfindung betreffenden Komponenten näher beschrieben. Der Peripherierechner PRO enthält eine Anzahl von Anschlußleitungen AO, an die weitere Rechner oder Endgeräte angeschlossen sein können. Desweiteren hat der Peripherierechner PRO ein Steuermittel SMO und eine Vorrichtung TABO zum Abspeichern einer Tabelle. In dem Peripherierechner PRO ist weiterhin ein Speicher SAO vorhanden, in dem Anweisungen abgespeichert sind, die durch das Steuermittel SMO ausgeführt werden. Die in der Vorrichtung TABO abgespeicherte Tabelle enthält Informationen über den Status der Anschlußleitungen AO. Status bedeutet dabei beispielsweise den Anschlußleitungstyp, die Verfügbarkeit und den Belegungszustand. Der Zentralrechner ZR enthält ebenfalls ein Steuermittel SMZR und einen Speicher, in dem Anweisungen abgespeichert sind, die das Steuermittel SMZR ausführen muß.

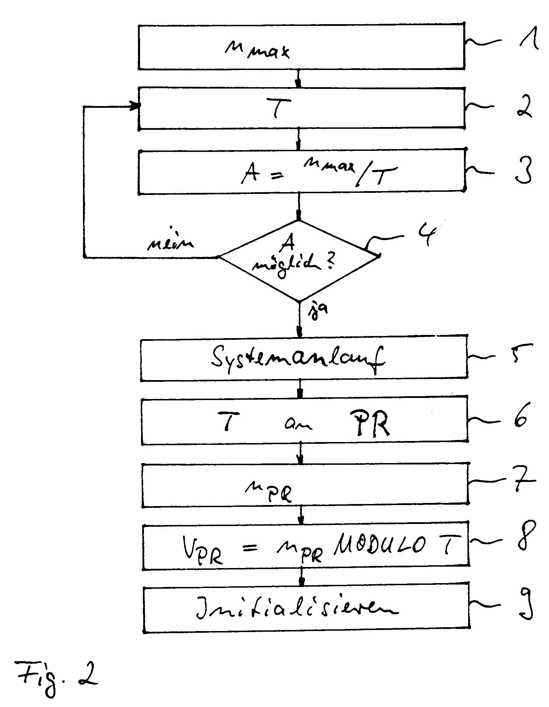

Fig. 2 zeigt das Ablaufdiagramm des ersten Ausführungsbeispiels des erfindungsgemäßen Verfahrens, daß in dem Mehrrechnersystem MRS nach Fig. 1 durchgeführt wird. Bei einem Systemanlauf oder einem Systemwiederanlauf des Mehrrechnersystems MRS melden die Peripherierechner PRO, ..., PR29 ihre Verfügbarkeit und die Verfügbarkeit ihrer Anschlußleitungen an den Zentralrechner ZR. Dieser Vorgang wird auch Initialisierung genannt.

In einem Schritt 1 wird die maximal mögliche Anzahl $n_{max}$ von in dem Mehrrechnersystem MRS vorhandenen Peripherierechnern PR vorgegeben. Diese Vorgabe kann durch eine Bedienperson gemacht werden, die über eine Eingabevorrichtung die Möglichkeit der Eingabe von Anweisungen oder von Daten in das Mehrrechnersystem MRS hat. Die Eingabevorrichtung kann entweder direkt an das Rechnerkommunikationsnetz RN angeschlossen sein oder an den Zentralrechner ZR. In einem Schritt 2 wird ein Zeitintervall T vorgegeben, in dem der Systemanlauf mit der Initialisierung aller Peripherierechner PRO, ..., PR29 abgeschlossen sein muß. Die Vorgabe des Zeitintervalls T kann ebenfalls durch die Bedienperson mittels der Eingabevorrichtung durchgeführt werden. In einem folgenden Schritt 3 wird ein Angebot $A = (n_{max}$ dividiert durch T) berechnet. Das Angebot A gibt an, wieviele Verfügbarkeitsmeldungen von den Peripherierechnern PRO, ..., PR29 der Zentralrechner ZR beim Systemanlauf gleichzeitig verarbeiten muß. In einem anschließenden Schritt 4 wird überprüft, ob der Zentralrechner ZR dieses Angebot A verarbeiten kann. Ist er dazu nicht in der Lage, dann wird zum Verfahrensschritt 2 zurückverzweigt und die Vorgabe des Zeitintervalls T geändert, d.h. es wird vergrößert. Stellt man im Schritt 4 fest, daß der Zentralrechner ZR das Angebot A verarbeiten kann, dann wird in einem Schritt 5 eine Anweisung zum Systemanlauf erteilt. Diese Anweisung zum Systemanlauf kann ebenfalls von der Bedienperson mittels der Eingabevorrichtung gegeben werden. Es ist allerdings auch möglich, die Anweisung automatisch nach dem Schritt 4 zu erteilen. Die Schritte 1-4 werden in dem Zentralrechner ZR durchgeführt. In einem Schritt 6 wird das Zeitintervall T über das Rechnerkommunikationsnetz RN von dem Zentralrechner ZR an die Peripherierechner PRO, ..., PR29 übermittelt. Es ist auch möglich die Schritte 1-4 nicht zu Beginn des erfindungsgemäßen Verfahrens in dem Zentralrechner ZR, sondern diese Schritte 1-4 bereits bei der Implementierung des erfindungsgemäßen Verfahrens durchzuführen und das Zeitintervall T bereits in den Anweisungen vorzugeben, die in den Speichern der Peripherierechner PRO, ..., PR29 zur Verarbeitung durch die Steuermittel abgespeichert sind. Der Schritt 6 entfällt in diesem Falle. In einem Schritt 7 findet eine Festlegung von spezifischen Rechnernummern $n_{PR}$ statt. Jeder der Peripherierechner PRO, ..., PR29 liest seine Adresse in dem Mehrrechnersystem MRS, die im einfachsten Fall die Durchnummerierung der Peripherierechner von $n_{PR} = 1$ bis $n_{PR} = 30$ sein kann. In einem anschließenden Schritt 8 wird für jeden der Peripherierechner PRO, ..., PR29 eine rechnerabhängige Meldungsverzögerung $V_{PR}$ bestimmt, nach der er sich initialisieren muß. Die rechnerabhängigen Meldungsverzögerungen $V_{PR}$ ergeben sich aus $V_{PR} = n_{PR}$ MODULO T. Nach der Berechnung der rechnerabhängigen Meldungsverzögerungen $V_{PR}$ in dem Schritt 7 meldet jeder der Peripherierechner PRO, ..., PR29 in einem Schritt 8 seine Verfügbarkeit und die in den Vorrichtungen TAB abgespeicherte Verfügbarkeit seiner Anschlußleitungen A entsprechend seiner Meldungsverzögerung $V_{PR}$ an den Zentralrechner ZR. Bei der Anwendung des erfindungsgemäßen Verfahrens ist garantiert, daß die Initialisierung der Peripherierechner PRO, ..., PR29 in Form der Verfügbarkeitsmeldungen in dem Zeitintervall T abgeschlossen ist. In dem vorliegenden Ausführungsbeispiel des Mehrrechnersystems MRS sind n = 30 Peripherierechner PRO, ..., PR29 an das Rechnerkommunikationsnetz RN angeschlossen. Die maximal mögliche Anzahl $n_{max}$ von in dem Mehrrechnersystem MRS vorhandenen Peripherierechnern beträgt ebenfalls $n_{max} = 30$. Es wird ein Zeitintervall T = 10 Sekunden vorgegeben. Daraus erhält man ein Angebot A = 3/s , d.h. der Zentralrechner ZR muß 3 Verfügbarkeitsmeldungen der Peripherierechner PRO, ..., PR29 gleichzeitig verarbeiten.

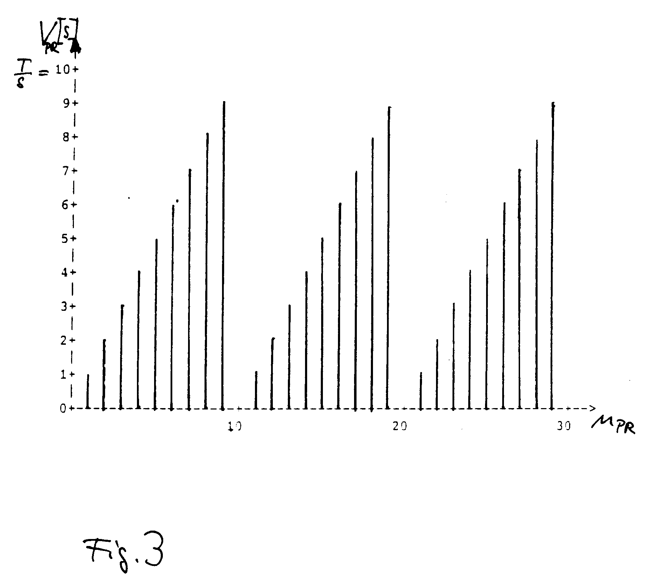

Die Fig. 3 zeigt die Darstellung der Meldungsverzögerungen $V_{PR}$ der Peripherierechner PRO, ..., PR29 des erfindungsgemäßen Rechnersystems MRS nach Fig. 1. Auf der Abszisse des Koordinatensystems sind die n = 30 Peripherierechner PRO, ..., PR29 aufgetragen. Auf der Ordinate des Koordinatensystems ist die Meldungsverzögerung $V_{PR}$ aufgetragen. Bildet man die Einhüllende um die diskreten Werte, so erkennt man deutlich den Sägezahnkurvenverlauf der Meldungsverzögerung $V_{PR}$ beginnend mit der Meldungsverzögerung $V_{PR} = Os$ bei den Peripherierechnern PRO, PR10 und PR20 und endend mit der Meldungsverzögerung $V_{PR} \approx 9$ s bei den Peripherierechnern PR9, PR19 und PR29. Zu erkennen ist ebenfalls das Angebot A = 3/s , das der Zentralrechner ZR gleichzeitig verarbeiten muß. Nach dem vorgegebenen Zeitintervall T = 10 Sekunden ist der komplette Initialisierungsprozeß abgeschlossen.

Ein zweites Ausführungsbeispiel dieses erfindungsgemäßen Verfahrens ist, daß die Peripherierechner PRO, ..., PR29 ihre rechnerabhängige Meldungsverzögerung $V_{PR}$ von dem Zentralrechner ZR zugewiesen bekommen. Dazu findet nach der Anweisung zum Systemanlauf im Schritt 5 nach Fig. 2 die Festlegung der spezifischen Rechnernummern $n_{PR}$ im Zentralrechner ZR statt. Anschließend werden die rechnerabhängigen Meldungsverzögerungen $V_{PR}$ im Zentralrechner ZR bestimmt. Diese rechnerabhängigen Meldungsverzögerungen $V_{PR}$ werden danach den Peripherierechnern PRO, ..., PR29 über das Rechnerkommunikationsnetz RN zugewiesen. Die Peripherierechner PRO, ..., PR29 melden daraufhin entsprechend ihrer rechnerabhängigen Meldungsverzögerungen $V_{PR}$ ihre Verfügbarkeit an den Zentralrechner ZR.

## Patentansprüche

1. Verfahren für eine Überlastvermeidung bei einem Systemanlauf eines Mehrrechnersystems (MRS), das n Peripherierechner (PRO, ..., PR29) und einen Zentralrechner (ZR) hat, und die n Peripherierechner (PRO, ..., PR29) und der Zentralrechner (ZR) jeweils mit einem Rechnerkommunikationsnetz (RN) verbunden sind, **dadurch gekennzeichnet,**
daß die n Peripherierechner (PRO, ..., PR29) jeweils nach einer Anweisung zum Systemanlauf (5) und nach einer peripherierechnerabhängigen Meldungsverzögerung ($V_{PR}$) ihre Verfügbarkeit über das Rechnerkommunikationsnetz (RN) an den Zentralrechner (ZR) melden und
daß diese Verfügbarkeitsmeldungen der n Peripherierechner (PRO, ..., PR29) an den Zentralrechner (ZR) nach einem vorgegebenen Zeitintervall (T) beendet sind.

2. Verfahren nach Anspruch 1, dadurch gekennzeichnet,
daß jedem der n Peripherierechner (PRO, ..., PR29) eine spezifische Rechnernummer ($n_{PR}$) in dem Mehrrechnersystem (MRS) zugeteilt wird und

daß die peripherierechnerabhängige Meldungsverzogerung ($V_{PR}$) nach der folgenden Vorschrift bestimmt wird:

peripherierechnerabhängige Meldungsverzögerung ($V_{PR}$) = spezifische Rechnernummer ($n_{PR}$)

MODULO Zeitintervall (T).

3. Verfahren nach Anspruch 1 oder 2, dadurch gekennzeichnet,
daß eine maximal mögliche Anzahl ($n_{max}$) von in dem Mehrrechnersystem (MRS) enthaltenen Peripherierechnern (PRO, ..., PR29) vorgegeben wird,
daß aus der Division der maximal möglichen Anzahl ($n_{max}$) von in dem Mehrrechnersystem (MRS) enthaltenen Peripherierechnern (PRO, ..., PR29) mit dem vorgegebenen Zeitintervall (T) ein Angebot (A) bestimmt wird,
daß überprüft wird, ob der Zentralrechner (ZR) die Verfügbarkeitsmeldungen von einer Anzahl von Peripherierechnern (PRO, ..., PR29), die diesem Angebot (A) entspricht, gleichzeitig verarbeiten kann und
daß die Vorgabe des Zeitintervalls (T) geändert wird, wenn der Zentralrechner (ZR) diese dem Angebot (A) entsprechende Anzahl von Peripherierechnern (PRO, ..., PR29) nicht gleichzeitig verarbeiten kann.

4. Verfahren nach Anspruch 2 oder 3, dadurch gekennzeichnet,
daß jeder der Peripherierechner (PRO, ..., PR29) von dem Zentralrechner (ZR) über das Rechnerkommunikationsnetz (RN) das vorgegebene Zeitintervall (T) übermittelt bekommt,
daß jeder der Peripherierechner (PRO, ..., PR29) seine spezifische Rechnernummer ($n_{PR}$) bestimmt und
daß jeder der Peripherierechner (PRO, ..., PR29) anschließend seine peripherierechnerabhängige Meldungsverzögerung ($V_{PR}$) bestimmt.

5. Verfahren nach Anspruch 2 oder 3, dadurch gekennzeichnet,
daß der Zentralrechner (ZR) die spezifischen Rechnernummern ($n_{PR}$) der n Peripherierechner (PRO, ..., PR29) bestimmt,
daß der Zentralrechner (ZR) mittels des vorgegebenen Zeitintervalls (T) die peripherierechnerabhängigen Meldungsverzögerungen ($V_{PR}$) bestimmt und
daß der Zentralrechner (ZR) jeden der Peripherierechner (PRO, ..., PR29) entsprechend seiner peripherierechnerabhängigen Meldungsverzögerung ($V_{PR}$) anweist, seine Verfügbarkeitsmeldung zu übermitteln.

6. Mehrrechnersystem (MRS), das n Peripherierechner (PRO, ..., PR29) und einen Zentralrechner (ZR) hat, und die n Peripherierechner (PRO, ..., PR29) und der Zentralrechner (ZR) jeweils mit einem Rechnerkommunikationsnetz (RN) verbunden sind, **dadurch gekennzeichnet,**
daß die Peripherierechner (PRO, ..., PR29) Steuermittel (SMO) haben, die die Peripherierechner (PRO, ..., PR29) aufgrund von in Speichern (SAO) abgespeicherten Anweisungen so steuern, daß die n Peripherierechner (PRO, ..., PR29) jeweils nach einer Anweisung zum Systemanlauf (5) und nach einer peripherierechnerabhängigen Meldungsverzögerung ($V_{PR}$) ihre Verfügbarkeit über das Rechnerkommunikationsnetz (RN) an den Zentralrechner (ZR) melden und
daß diese Verfügbarkeitsmeldungen der n Peripherierechner (PRO, ..., PR29) an den Zentralrechner (ZR) nach einem vorgegebenen Zeitintervall (T) beendet sind.

7. Mehrrechnersystem nach Anspruch 6, dadurch gekennzeichnet,
daß es jedem der n Peripherierechner (PRO, ..., PR29) eine spezifische Rechnernummer ($n_{PR}$) zuteilt und
daß die peripherierechnerabhängige Meldungsverzögerung ($V_{PR}$) nach der folgenden Vorschrift bestimmt wird:

peripherierechnerabhängige Meldungsverzögerung ($V_{PR}$) = spezifische Rechnernummer ($n_{PR}$)

MODULO Zeitintervall (T).

Fig. 1

Fig. 2

Fig. 3